# EUROPÄISCHE PATENTSCHRIFT

(11) **EP 3 126 174 B1**
(45) Veröffentlichungstag und Bekanntmachung des Hinweises auf die Patenterteilung: **06.06.2018**
(21) Anmeldenummer: 15710735.0
(22) Anmeldetag: 09.03.2015
(51) Int. Cl.: B60K 15/01, F16L 3/13, B60K 15/04

(54) **EINFÜLLSYSTEM FÜR BETRIEBSFLÜSSIGKEITSBEHÄLTER**
FILLING SYSTEM FOR OPERATING FLUID CONTAINERS
SYSTÈME DE REMPLISSAGE POUR RÉSERVOIR À LIQUIDE DE SERVICE

(30) Priorität: 31.03.2014 DE 102014004545
(43) Veröffentlichungstag der Anmeldung: 08.02.2017
(73) Patentinhaber: Kautex Textron GmbH & Co. KG, 53229 Bonn (DE)
(72) Erfinder: EULITZ, Dirk, 53115 Bonn (DE); SCHICHLEIN, Hilmar, 53115 Bonn (DE)
(74) Vertreter: Richly Ritschel
(86) Internationale Anmeldenummer: PCT/EP2015/054796
(87) Internationale Veröffentlichungsnummer: WO 2015/150022

(56) Entgegenhaltungen:
- WO-A1-03/104013
- DE-A1- 3 422 345
- DE-A1- 10 338 065
- DE-C- 895 682
- GB-A- 2 088 515
- JP-A- 2007 091 056
- US-A- 2 165 357
- US-A- 3 369 695
- US-A- 4 573 694
- US-A1- 2007 205 193

## Beschreibung

Die vorliegende Erfindung betrifft ein Befüllsystem für einen Betriebsflüssigkeitsbehälter eines Kraftfahrzeugs. Ferner betrifft die vorliegende Erfindung einen Betriebsflüssigkeitsbehälter mit einem entsprechend ausgebildeten Befüllsystem. Des Weiteren betrifft die vorliegende Erfindung ein Kraftfahrzeug mit einem entsprechenden Betriebsflüssigkeitsbehälter. Ein Befüllsystem nach dem Oberbegriff des Anspruchs 1 ist aus GB 2088515 bekannt.

Betriebsflüssigkeitsbehältern, beispielsweise bei Kraftstoffbehältern oder bei SCR-Behältern zur Aufnahme einer wässrigen Harnstofflösung, wird die Verbindung zwischen dem Einfüllstutzen und dem Betriebsflüssigkeitsbehälter üblicherweise durch eine starre Rohrverbindung gewährleistet. Die starre Rohrverbindung kann beispielsweise durch ein Blasformteil gebildet sein. Ferner ist es auch möglich, dass die Rohrverbindung durch eine Metallverbindung realisiert ist.
Bei Diesel-Kraftfahrzeugen und bei SCR-Betriebsflüssigkeitsbehältern kann die als Blasformteil realisierte Rohrverbindung zwischen dem Einfüllstutzen und dem Betriebsflüssigkeitsbehälter einlagig realisiert sein. Bei einem als Kraftstoffbehälter realisierten Betriebsflüssigkeitsbehälter zur Aufnahme von Otto-Kraftstoffen umfasst die Rohrleitung im Falle eines Blasformteils eine Barriereschicht, die für Kohlenwasserstoffe undurchlässig ist.
Diesen aus dem Stand der Technik bekannten Rohrleitungssystemen, die zwischen einem Einfüllstutzen und dem Betriebsflüssigkeitsbehälter angeordnet sind und diese miteinander fluidverbinden, ist gemein, dass diese starr und somit im Wesentlichen nicht flexibel ausgebildet sind. Im Falle eines Unfalls können folglich diese Rohrsysteme einer Verformung des Fahrzeugs nicht ausweichen oder nicht nachgeben. Als Konsequenz können die Rohrsysteme durch in den Aufnahmeraum, eindringende Karosserieteile leicht zerquetscht oder zerschnitten werden. Weiterhin ist es auch möglich, dass die Rohrsysteme entweder im Bereich des Betriebsflüssigkeitsbehälters, im Bereich des Einfüllstutzens oder an einer beliebigen anderen Stelle abreißen. Dies hat zur Folge, dass Betriebsflüssigkeit nach einem Unfall austreten kann. Im Falle eines als Kraftstoffbehälter ausgebildeten Betriebsflüssigkeitsbehälters führt dies zu erheblichen Brandgefahren.
Aus dem Stand der Technik ist es bekannt, diese Rohrsysteme aus Stahlrohren zu fertigen. Ferner ist es bekannt, die Rohrsysteme mittels Aramidfasern zu verstärken. Jedoch haben diese Maßnahmen nicht dazu geführt, dass bei Unfällen und Verformungen des Aufnahmeraumes, in dem das Rohrsystem innerhalb des Fahrzeugs aufgenommen ist, das Rohrsystem selber nicht zerquetscht/zerschnitten oder von dem Kraftstoffbehälter bzw. dem Einfüllstutzen abgerissen wird.
Die der vorliegenden Erfindung zugrunde liegende Aufgabe ist die Bereitstellung eines Befüllsystems, das eine erhöhte Sicherheit im Falle eines Unfalls aufweist. Darüber hinaus liegt der vorliegenden Erfindung die Aufgabe zugrunde, ein Befüllsystem bereitzustellen, das flexibel für unterschiedliche Einbauräume innerhalb unterschiedlicher Kraftfahrzeuge verwendet werden kann. Ferner liegt der vorliegenden Erfindung die Aufgabe zugrunde, ein Befüllsystem bereitzustellen, das ein geringeres Gewicht aufweist, kürzere Zykluszeiten zu Herstellung aufweist und geringere Fertigungskosten aufweist.

Die der vorliegenden Erfindung zugrundeliegenden Aufgaben werden durch ein Befüllsystem mit den Merkmalen des Anspruchs 1 gelöst. Vorteilhafte Ausführungsformen sind in dessen abhängigen Ansprüchen beschrieben. Ferner werden die der vorliegenden Erfindung zugrundeliegenden Aufgaben auch durch einen Betriebsflüssigkeitsbehälter mit den in Anspruch 13
aufgeführten Merkmalen gelöst. Eine vorteilhafte Ausgestaltung weist die Merkmale von Anspruch 14
auf.

Als Schlauch ist dabei eine rohrförmige Verbindung mit einem Fluidkanal bezeichnet, wobei der Schlauch verformbar ist und sich leicht einer beispielsweise durch die Einfüllschlauchhalteeinrichtung vorgegebenen Kontur anpassen lässt. Bei dem Betriebsflüssigkeitsbehälter kann es sich beispielsweise um einen Kraftstoffbehälter für Dieselkraftstoffe oder für Otto-Kraftstoffe handeln. Ferner kann es sich bei dem Betriebsflüssigkeitsbehälter auch um einen SCR-Behälter handeln, der für die Aufnahme von wässriger Harnstofflösung ausgebildet ist. Darüber hinaus ist das Befüllsystem für jegliche Betriebsflüssigkeitsbehälter eines Kraftfahrzeugs geeignet, die zur Aufnahme von nachfüllbaren Betriebsflüssigkeiten ausgebildet sind.
Bei dem Einbauraum des Kraftfahrzeugs handelt es sich um einen Einbauraum zwischen dem Betriebsflüssigkeitsbehälter und dem Einfüllstutzen. Aufgrund der Flexibilität des Einfüllschlauchs ist dieser biegbar. Somit kann der Einfüllschlauch im Falle einer Intrusion (beispielsweise bei einem Unfall des Kraftfahrzeugs) in den Aufnahmeraum des Einfüllschlauchs der Intrusion ausweichen, ohne vom Betriebsflüssigkeitsbehälter oder vom Einfüllstutzen abzureißen. Aufgrund der Flexibilität des Einfüllschlauchs und der damit einhergehenden Ausweichmöglichkeit des Einfüllschlauchs bei einer Intrusion in den Aufnahmeraum ist die Wahrscheinlichkeit einer Quetschung oder eines Schnitts des Einfüllschlauchs durch in den Einbauraum dringende Karosserieteile vermindert. Ein mit dem erfindungsgemäßen Befüllsystem ausgestatteter Betriebsflüssigkeitsbehälter weist folglich eine erhöhte Sicherheit auf, so dass im Falle eines Unfalles ein Austreten der Betriebsflüssigkeit verhindert wird bzw. weniger wahrscheinlich wird. Darüber hinaus weist ein erfindungsgemäßes Befüllsystem im Vergleich zu blasgeformten Einfüllrohren eine Gewichtsreduktion von 30 % bis 50 % auf. Im Vergleich zu aus Stahlrohren gefertigten Befüllsystemen weist das erfindungsgemäße Befüllsystem eine Gewichtsreduktion von 100 % bis 200 % auf.

Aufgrund der möglichen kontinuierlichen Extrusion des Einfüllschlauchs können pro Zeiteinheit im Vergleich zu blasgeformten Einfüllsystemen eine signifikant höhere Anzahl von Einfüllschläuchen hergestellt werden. Darüber hinaus ist der Investitionsbedarf für eine Fertigungsanlage für das erfindungsgemäße Befüllsystem erheblich geringer.

Ferner ist es möglich, den Einfüllschlauch an zentraler Stelle zu fertigen und unterschiedliche Einfüllschlauchhalteeinrichtungen zu bevorraten, so dass unterschiedliche Einbauräume in unterschiedlichen Kraftfahrzeugen mit gleichen Einfüllschläuchen jedoch mit unterschiedlichen Einfüllschlauchhalteeinrichtungen realisiert werden. Dies reduziert die Kosten für die Bevorratung des Befüllsystems. Darüber hinaus ist es möglich, für Prototypen schnell, einfach und kostengünstig Befüllsysteme bereitzustellen.

Wenn der Einfüllschlauch, der durch die Einfüllschlauchhalteeinrichtung, die auch als Kontureinrichtung bzw. Konturschale bezeichnet werden kann, definierten Kontur folgt, dann weist der Einfüllschlauch zumindest abschnittsweise eine dieser Kontur entsprechende Außenform auf.

Vorzugsweise umfasst die Einfüllschlauchhalteeinrichtung zumindest einen Hinterschnitt, wobei der an der Einfüllschlauchhalteeinrichtung befestigte Einfüllschlauch durch den Hinterschnitt hintergriffen ist.

Der Hinterschnitt kann beispielsweise als Befestigungszunge und/oder als Befestigungslasche ausgebildet sein. Dabei ist der Hinterschnitt vorzugsweise elastisch ausgebildet. Folglich kann die Befestigungszunge und/oder die Befestigungslasche elastisch ausgebildet sein.

Die Bereitstellung eines Hinterschnitts an der Einfüllschlauchhalteeinrichtung bietet den Vorteil, dass der Einfüllschlauch einfach in den durch die Einfüllschlauchhalteeinrichtung definierten Einbrauraum hinein geclipst bzw. gedrückt werden kann. Bei Überschreiten einer vorgegebenen Beschleunigung, beispielsweise im Falle eines Unfalls, kann sich der Einfüllschlauch aus der Einfüllschlauchhalteeinrichtung lösen und Intrusionen in den Einbauraum zwischen dem Betriebsflüssigkeitsbehälter und dem Einfüllstutzen ausweichen. Gemäß Erfindung ist die Einfüllschlauchhalteeinrichtung als Konturschale ausgebildet. Dabei kann der Aufnahmeraum der Konturschale beispielsweise im Querschnitt U-förmig ausgestaltet sein und zwei parallel zueinander verlaufende Wände aufweisen, die eine beliebige Form im Raum einnehmen können. Die Konturschale kann auch schalenförmig ausgebildet sein, die dann ebenfalls eine beliebige Form im Raum einnehmen kann. Selbstverständlich kann die Konturschale auch Hinterschnitte/Hinterschneidungen aufweisen, so dass der Einfüllschlauch in die Konturschale eingeclipst werden kann.
Ferner kann die Konturschale derart ausgebildet sein, dass diese den Einfüllschlauch als auch eine Entlüftungsleitung und gegebenenfalls noch Elektroleitungen halten kann. Dafür kann die Konturschale mit mehreren unterschiedlichen Halteeinrichtungen ausgestattet sein, wobei eine erste Halteeinrichtung dazu ausgebildet ist, den Einfüllschlauch zu halten, eine zweite Halteeinrichtung dazu ausgebildet ist, eine Entlüftungsleitung zu halten, und eine dritte Halteeinrichtung dazu ausgebildet sein kann, eine elektrische Leitung zu halten und zu führen.
Vorzugsweise weist die durch die Einfüllschlauchhalteeinrichtung definierte Kontur zumindest eine Biegung auf, so dass ein mittels der Einfüllschlauchhalteeinrichtung befestigter Einfüllschlauch der Biegung folgt. Dadurch kann das Befüllsystem unterschiedlichen Einbauräumen in Kraftfahrzeug beliebig angepasst werden.
Vorzugsweise weist die Einfüllschlauchhalteeinrichtung zumindest eine Sollbruchstelle auf. Dies bietet den Vorteil, dass im Falle des Überschreitens einer vorgegebenen Krafteinwirkung, beispielsweise im Falle eines Unfalls, die Einfüllschlauchhalteeinrichtung an der Sollbruchstelle nachgibt bzw. bricht, so dass der Einfüllschlauch einer Intrusion in den Einbauraum besser ausweichen kann. Die Sollbruchstelle kann durch eine Perforation in der Konturschale, durch eine Verminderung der Materialstärke der Konturschale und/oder durch die Geometrie der Konturschale realisiert sein. Auch kann die Konturschale als 2K-Bauteil aus zwei unterschiedlichen Kunststoffen mit unterschiedlichen Materialeigenschaften realisiert sein.

Ferner ist es möglich, dass die Einfüllschlauchhalteeinrichtung derart ausgebildet, dass diese oben beschriebene Sollbruchstelle aufweist, den Einfüllschlauch an vorbestimmten Befestigungspunkten jedoch derart stabil hält, dass im Falle eines Unfalls sich der Einfüllschlauch aus diesen Befestigungspunkten nicht löst. Folglich kann der Einfüllschlauch an zu definierenden Stellen aus der Einfüllschlauchhalteeinrichtung ausbrechen und/oder die Einfüllschlauchhalteeinrichtung gibt an der/den Sollbruchstelle(n) nach, jedoch wird der Einfüllschlauch an den Befestigungspunkten derart stabil gehalten, dass der Einfüllschlauch an diesen Punkten nicht aus der Einfüllschlauchhalteeinrichtung ausbrechen kann.

Vorzugsweise umfasst die Einfüllschlauchhalteeinrichtung zumindest eine Brandschutzwand und/oder eine Schlagschutzwand. Dadurch wird der Einfüllschlauch im Falle eines Brands durch die Einfüllschlauchhalteeinrichtung vor übermäßiger Hitzeeinwirkung geschützt. Ferner kann bei Bereitstellung einer Schlagschutzwand die Einfüllschlauchhalteeinrichtung den Einfüllschlauch im Falle einer Intrusion schützen. Ferner kann durch die Bereitstellung einer Schlagschutzwand beispielsweise im Falle eines Reifenplatzers der Einfüllschlauch vor Reifenteilen geschützt werden.

In dem Fall, dass die Einfüllschlauchhalteeinrichtung Sollbruchstellen aufweist und darüber hinaus eine Brandschutzwand und/oder eine Schlagschutzwand umfasst, verbinden sich die Vorteile, dass im Falle einer Intrusion in den Einbauraum zum einen der Einfüllschlauch der Intrusion ausweichen kann und zum anderen weiterhin der Einfüllschlauch beispielsweise durch die Schlagschutzwand oder die Brandschutzwand vor Hitzeeinwirkung und vor Verletzung geschützt ist.

Vorzugsweise ist die Einfüllschlauchhalteeinrichtung als Radhausschale mit integrierter Halteeinrichtung für den Einfüllschlauch ausgebildet. Dadurch wird die Anzahl von Einbauteilen in dem Kraftfahrzeug reduziert. Die Halteeinrichtung, die an der Radhausschale angebracht ist, ist dabei an der dem Rad des Kraftfahrzeugs abgewandten Seite angeordnet. Die Radhausschale dient dabei als Schlagschutzwand. Alternativ kann die Radhausschale noch mit einer weiteren zusätzlichen Schlagschutzwand und/oder mit einer Brandschutzwand ausgestattet sein. Ferner kann die Radhausschale eine oder mehrere Sollbruchstellen aufweisen.

Vorzugsweise ist der Einfüllschlauch als mehrlagiger Einfüllschlauch mit einer integrierten Barriereschicht, beispielsweise aus EVOH oder PA bestehend, für Kohlenwasserstoffe ausgebildet.

Weiter vorzugsweise weist der Einfüllschlauch eine koaxial zum Einfüllschlauch verlaufende und im Querschnitt konkav ausgebildete Einbuchtung auf.

Diese Einbuchtung kann zum einen zur Befestigung des Einfüllschlauchs an der Einfüllschlauchhalteeinrichtung dienen. Ferner kann die Einbuchtung auch oder alternativ zur Aufnahme einer Entlüftungsleitung dienen. Daher dient in diesem Falle der Einfüllschlauch als Halteeinrichtung für eine Entlüftungsleitung. Weiterhin kann die Einbuchtung zur Aufnahme einer Elektroleitung dienen, so dass der Einfüllschlauch dann auch als Halteeinrichtung für die Elektroleitung dient. In dem Falle einer Anordnung einer Entlüftungsleitung und/oder einer Elektroleitung in der Einbuchtung des Einfüllschlauchs muss die Einfüllschlauchhalteeinrichtung nicht notwendigerweise eine Halteeinrichtung für die Entlüftungsleitung oder die Elektroleitung aufweisen.

Vorzugsweise ist der Einfüllschlauch zumindest abschnittsweise als Wellschlauch ausgebildet. Dies erhöht die Flexibilität des Einfüllschlauchs, so dass der Einfüllschlauch kleinere Biegungsradien beschreiben kann.

Vorzugsweise umfasst der Einfüllschlauch zumindest abschnittsweise eine spiralförmig an der Außenseite des Einfüllschlauchs verlaufende Versteifungsstruktur. Die spiralförmige Versteifungsstruktur bewirkt, dass der Einfüllschlauch in dem Bereich der Versteifungsstruktur eine erhöhte Festigkeit aufweist und die ihm aufgegebene Form beibehält.

Vorzugsweise ist der Einfüllschlauch als Doppelschlauch mit einer Außenleitung und einer in der Außenleitung angeordneten Innenleitung ausgebildet. Dabei kann die Außenleitung gewellt oder glatt ausgebildet sein. Ferner kann die Außenleitung abschnittsweise gewellt und abschnittsweise glatt ausgebildet sein. Selbiges gilt für die Innenleitung. Die Innenleitung kann gewellt oder glatt ausgebildet sein. Abschnittsweise kann die Innenleitung gewellt und abschnittsweise kann die Innenleitung gleichzeitig glatt ausgebildet sein.

Vorzugsweise ist die Innenleitung mit dem Außenleitung zumindest abschnittsweise über Materialstege derart verbunden, dass die Position der Innenleitung in der Außenleitung zumindest abschnittsweise durch die Materialstege fixiert ist. Dabei bleibt der Zwischenraum zwischen der Innenleitung und der Außenleitung auch im Bereich deren Verbindung fluiddurchgängig. Beispielsweise kann in den Endbereichen des Einfüllschlauchs die Innenleitung mit der Außenleitung mittels radial verlaufender Materialstege verbunden sein. Die Verbindung der Außenleitung mit dem Betriebsflüssigkeitsbehälter und/oder dem Einfüllstutzen erfolgt auf übliche Art und Weise stoffschlüssig und/oder formschlüssig.

Bei einer Biegung des Einfüllschlauchs erfolgt ein tangentiales Anlegen der Innenleitung an die Außenleitung im Bereich der Biegungsradien der Außenleitung, so dass ein Knicken der Innenleitung vermieden wird. Somit wird eine Belüftung zwischen der Außenleitung und der Innenleitung nicht verschlechtert. Weiterhin kann die Innenleitung zur Befüllung des Betriebsflüssigkeitsbehälters ungehindert benutzt werden.

Ein entsprechend ausgebildetes Befüllsystem bietet den Vorteil, dass der Einfüllschlauch sowohl die Befüllfunktion mit der Betriebsflüssigkeit als auch die Entlüftungsfunktion des Betriebsflüssigkeitsbehälters übernimmt. Dabei muss die Entlüftung nicht im Gegenstrom zu der Betriebsflüssigkeit erfolgen, so dass größere Befüllraten und Entlüftungsraten ermöglicht sind im Vergleich zu einem einwandig ausgebildeten Einfüllrohr.

Vorzugsweise ist die Außenleitung zumindest abschnittsweise als Wellschlauch und die Innenleitung zumindest abschnittsweise als Glattschlauch ausgebildet. Es ist auch möglich, dass die Außenleitung durchgehend als Wellschlauch und die Innenleitung durchgehend als Glattschlauch ausgebildet ist. Darüber hinaus ist es aber auch möglich, dass die Außenleitung als Glattschlauch und auch die Innenleitung als Glattschlauch ausgebildet sind. Ferner ist es möglich, dass sowohl die Außenleitung als auch die Innenleitung jeweils als Wellschlauch ausgebildet sind.

Vorzugsweise umfasst die Außenleitung zumindest abschnittsweise eine spiralförmig an der Außenseite der Außenleitung verlaufende Versteifungsstruktur. Aufgrund der Bereitstellung der spiralförmigen Versteifungsstruktur weist der Einfüllschlauch in diesem Bereich eine erhöhte Steifigkeit auf.

Vorzugsweise ist/sind die Innenleitung und/oder die Außenleitung als mehrlagiger Einfüllschlauch mit einer integrierten Barriereschicht für Kohlenwasserstoffe ausgebildet. Dadurch werden die Emissionen im Falle eines als Kraftstoffbehälter für Otto-Kraftstoffe ausgebildeten Betriebsflüssigkeitsbehälters reduziert.

Die der Erfindung zugrundeliegende Aufgabe wird auch durch einen Betriebsflüssigkeitsbehälter gelöst, der ein erfindungsgemäßes Befüllsystem umfasst. Dabei ist ein erstes Ende des Einfüllschlauchs mit dem Betriebsflüssigkeitsbehälter und ein zweites Ende des Einfüllschlauchs mit dem Einfüllstutzen fluidverbunden. Der Einfüllschlauch ist mittels der Einfüllschlauchhalteeinrichtung im Einbauraum des Kraftfahrzeugs derart befestigbar, dass der Einfüllschlauch einer durch die Einfüllschlauchhalteeinrichtung definierten Kontur folgt.

In dem Fall, dass der Einfüllschlauch als Doppelschlauch ausgebildet ist, ist sowohl die Innenleitung als auch die Außenleitung des Einfüllschlauchs jeweils mit dem Betriebsflüssigkeitsbehälter und mit dem Einfüllstutzen fluidverbunden. Dabei ist eine Betriebsflüssigkeit über den Einfüllstutzen und die Innenleitung in den Betriebsflüssigkeitsbehälter einfüllbar. Der Zwischenraum zwischen der Außenleitung und der Innenleitung des Einfüllschlauchs bildet eine Entlüftungsleitung zwischen dem Betriebsflüssigkeitsbehälterinnenraum und dem Einfüllstutzen.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Betriebsflüssigkeitsbehälters;
- Figur 2:: eine schematische Darstellung eines erfindungsgemäßen Befüllsystems mit einer als Konturschale ausgebildeten Einfüllschlauchhalteeinrichtung und einem als Wellschlauch ausgebildeten Einfüllschlauchs;
- Figur 3:: eine Einfüllschlauchhalteeinrichtung eines erfindungsgemäßen Befüllsystems in Alleinstellung;
- Figur 4:: eine schematische perspektivische Darstellung eines als Wellrohr ausgebildeten Einfüllschlauchs mit einer koaxialen Einbuchtung;
- Figur 5:: eine Querschnittsdarstellung des in Figur 4 dargestellten Einfüllschlauchs mit einer in der Einbuchtung angeordneten Entlüftungsleitung;
- Figur 6:: eine Querschnittsdarstellung eines eine Außenleitung und eine Innenleitung umfassenden Einfüllschlauchs;
- Figur 7:: eine schematische Darstellung eines als Doppelschlauch ausgebildeten Einfüllschlauchs mit zwei Biegungen; und
- Figur 8:: eine schematische Darstellung eines Einfüllschlauchs bzw. einer Außenleitung mit einer spiralförmigen Versteifungsstruktur.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

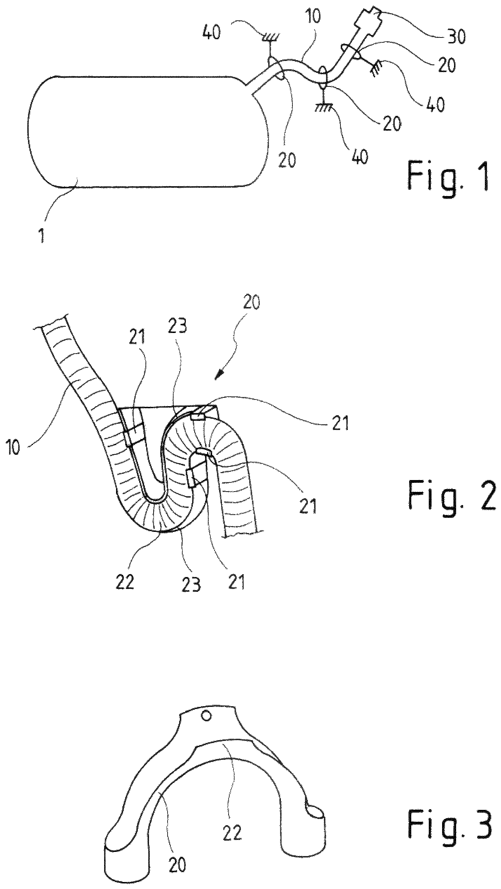

Figur 1 zeigt eine schematische Darstellung eines erfindungsgemäßen Betriebsflüssigkeitsbehälters 1 samt einem damit verbundenen erfindungsgemäßen Befüllsystems. Der Betriebsflüssigkeitsbehälter 1 ist mit einem Einfüllstutzen 30 über einen Einfüllschlauch 10 des Befüllsystems fluidverbunden. Der Einfüllschlauch 10 ist mittels mehrerer Einfüllschlauchhalteeinrichtungen 20 im Einbauraum des Kraftfahrzeugs befestigt. Dabei sind die Einfüllschlauchhalteeinrichtungen 20 an Befestigungspunkten 40 im Einbauraum des Kraftfahrzeugs fixiert.

Wie aus Figur 1 ersichtlich ist, folgt der Einfüllschlauch 10 aufgrund der Halterung durch die Einfüllschlauchhalteeinrichtung 20 im Einbauraum des Kraftfahrzeugs einer durch die Einfüllschlauchhalteeinrichtung 20 definierten Kontur.

In einer einfachsten Ausführung kann die Einfüllschlauchhalteeinrichtung 20 als Rohrschelle ausgebildet sein, die in dem Einbauraum des Kraftfahrzeugs fixiert ist und die den Einfüllschlauch 10 in dem Einbauraum hält. Bei der schematischen Anordnung der Einfüllschlauchhalteeinrichtungen 20 aus Figur 1 wird dem Einfüllschlauch 10 eine S-förmige Kontur auferlegt, so dass der Einfüllschlauch 10 zwei Biegungen aufweist. Aufgrund der Flexibilität des Einfüllschlauchs 10 ist dieser biegbar und könnte auch anderen durch die Einfüllschlauchhalteeinrichtungen 20 definierten Konturen folgen.

Der Einfüllschlauch 10 kann im Falle einer Intrusion (beispielsweise bei einem Unfall des Kraftfahrzeugs) in den Aufnahmeraum des Einfüllschlauchs 10 dieser Intrusion ausweichen, so dass ein Abriss des Einfüllschlauchs 10 von dem Betriebsflüssigkeitsbehälter 1 und/oder dem Einfüllstutzen 30 verhindert werden kann oder zumindest diesem Abreißen entgegengewirkt wird. Aufgrund der Flexibilität des Einfüllschlauchs 10 und der damit einhergehenden Ausweichmöglichkeit des Einfüllschlauchs 10 bei einer Intrusion in den Aufnahmeraum wird der Einfüllschlauch durch Karosserieteile nicht bzw. weniger gequetscht.

Folglich bietet das erfindungsgemäße Befüllsystem und der erfindungsgemäße Betriebsflüssigkeitsbehälter 1 den Vorteil, dass im Falle eines Unfalls dem Austreten von Betriebsflüssigkeit aus dem Betriebsflüssigkeitsbehälter 1 entgegen gewirkt wird.

Bei dem Betriebsflüssigkeitsbehälter 1 kann es sich beispielsweise um einen Kraftstoffbehälter 1 für Dieselkraftstoffe oder für Otto-Kraftstoffe handeln. Ferner kann der Betriebsflüssigkeitsbehälter 1 auch als SCR-Behälter 1 ausgelegt sein, der für die Aufnahme einer wässrigen Harnstofflösung vorgesehen ist, die in den Abgasstrang eines Kraftfahrzeugs einspritzbar ist, um die Stickoxid-Emissionen zu reduzieren.

Bei dem in Figur 2 dargestellten Befüllsystem ist die Einfüllschlauchhalteeinrichtung 20 als eine Konturschale 20 ausgebildet. Die Konturschale 20 umfasst dabei zwei parallel zueinander verlaufende Seitenwände 23, zwischen die der Einfüllschlauch 10 positionierbar ist. Folglich bildet die Konturschale 20 im Querschnitt betrachtet einen U-förmigen Aufnahmeraum für den Einfüllschlauch 10. Ferner umfasst die als Konturschale 20 ausgebildete Einfüllschlauchhalteeinrichtung 20 mehrere als Befestigungszungen 21 ausgebildete Hinterschnitte 21, die den zwischen den Seitenwänden 23 der Konturschale 20 angeordneten Einfüllschlauch 10 hintergreifen. Folglich halten die Hinterschnitte 21 den Einfüllschlauch 10 zuverlässig zwischen den Seitenwänden der Konturschale 20, so dass der Einfüllschlauch 10 nicht ohne weiteres aus der Konturschale 20 lösbar ist.

Im Falle des Überschreitens einer vorbestimmten Krafteinwirkung, die beispielsweise bei einem Unfall auftreten kann, kann sich der Einfüllschlauch 10 jedoch aus der Konturschale 20 lösen, indem die Haltezungen 21 aufgrund ihrer Flexibilität und Elastizität nachgeben und ein Herauslösen des Einfüllschlauchs 10 ermöglichen. Ferner kann die Konturschale 20 auch eine oder mehrere Sollbruchstellen aufweisen, die bei Überschreiten einer vorbestimmten Krafteinwirkung ein definiertes Brechen der Einfüllschlauchhalteeinrichtung 20 bewirkt. Dadurch kann der Einfüllschlauch 10 im Falle eines Unfalls einer Intrusion in den Einbauraum weiterhin ausweichen, wobei Teile der Konturschale 20 weiterhin mit dem Einfüllschlauch 10 verbunden sind.

Die Einfüllschlauchhalteeinrichtung 20 kann auch als Schlagschutz und/oder als Hitzeschutz dienen, indem diese als Schlagschutzwand und/oder als Hitzeschutzwand ausgebildet ist oder diese umfasst.

Aus Figur 2 ist ersichtlich, dass der Einfüllschlauch 10 zwei Biegungen 22 von jeweils etwa 180° aufweist, so dass der Einfüllschlauch 10 eine S-förmige Kontur aufweist.

Figur 3 zeigt eine Darstellung einer als Konturschale 20 ausgebildeten Einfüllschlauchhalteeinrichtung 20 eines erfindungsgemäßen Befüllsystems in Alleinstellung, d.h. ohne Einfüllschlauch 10. Aus Figur 3 ist ersichtlich, dass die durch die Konturschale 20 gebildete Kontur eine Biegung 22 von 180° aufweist. Ein mittels der in Figur 3 dargestellter Konturschale 20 gehaltener Einfüllschlauch 20 folgt der durch die Konturschale 20 definierten Kontur uns weist folglich auch eine Biegung von 180° auf. Aus Figur 3 ist ferner ersichtlich, dass die Endstücke der Konturschale 20 geschlossen ausgebildet sind, so dass sich ein Einfüllschlauch 10 nicht aus der Konturschale 20 lösen kann. Der Mittenabschnitt der Konturschale 20 ist jedoch offen ausgestaltet, so dass sich ein Einfüllschlauch 20 in diesem Bereich von der Konturschale 20 lösen kann.

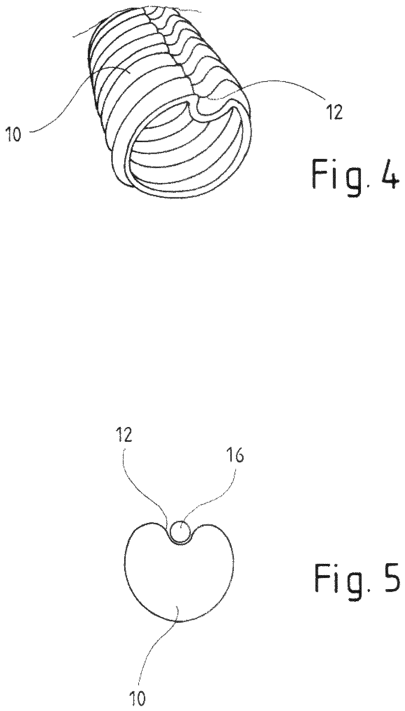

Figur 4 zeigt eine schematische räumliche Darstellung eines erfindungsgemäßen Einfüllschlauchs 10, der als Wellrohr 10 bzw. als Wellschlauch 10 ausgebildet ist. Ein Wellschlauch 10 bietet den Vorteil, dass dieser eine nochmals erhöhte Flexibilität aufweist, so dass der Wellschlauch 10 einer durch die Einfüllschlauchhalteeinrichtung 20 definierten Kontur nochmals besser folgen kann. Folglich sind kleinere Biegungsradien durch die Ausführung als Wellschlauch 10 möglich.

Aus Figur 4 ist ersichtlich, dass der als Wellschlauch 10 ausgebildete Einfüllschlauch 10 eine koaxial zum Einfüllschlauch 10 verlaufende und im Querschnitt konkav ausgebildete Einbuchtung 12 aufweist. Wie in Figur 5 im schematischen Querschnitt dargestellt, kann in der Einbuchtung 12 beispielsweise eine Entlüftungsleitung 16 angeordnet sein. Ferner ist es auch möglich, dass in der koaxialen Ausbuchtung 12 auch eine Elektroleitung angeordnet ist.

Die Formgebung der koaxialen Ausbuchtung 12 kann derart sein, dass die koaxiale Ausbuchtung 12 selber Hinterschnitte aufweist, so dass beispielsweise eine Entlüftungsleitung 16 in den durch die Einbuchtung 12 definierten Aufnahmeraum eingeclipst werden kann. Die Entlüftungsleitung 16 ist dann durch die Hinterschnitte der Einbuchtung 12 hintergriffen und kann nur unter Krafteinwirkung aus der Einbuchtung 12 entfernt werden.

Die Anordnung einer Entlüftungsleitung 16 bzw. einer elektrischen Leitung in der Einbuchtung 12 bietet den Vorteil, dass keine gesonderte Halteeinrichtung für die Entlüftungsleitung 16 bzw. für eine Elektroleitung bereitgestellt werden muss. Folglich dient in diesem Falle die Einfüllschlauchhalteeinrichtung 20 ebenfalls als Halteeinrichtung für eine mögliche Entlüftungsleitung 16 bzw. für eine Elektroleitung.

Natürlich ist es auch möglich, dass ein als Glattrohr 10 ausgebildeter Einfüllschlauch 10 eine koaxial zum Einfüllschlauch 10 verlaufende und im Querschnitt konkav ausgebildete Einbuchtung 12 aufweist.

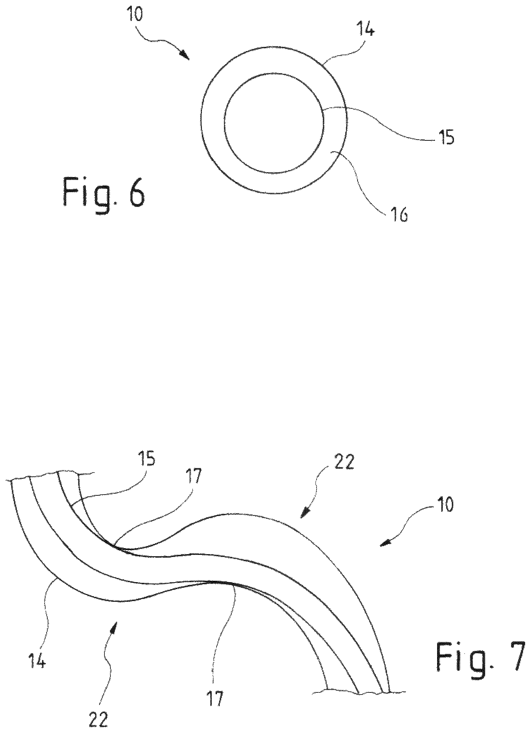

In Figur 6 ist im schematischen Querschnitt ein als Doppelschlauch 10 ausgebildeter Einfüllschlauch 10 dargestellt. Der Einfüllschlauch 10 umfasst dabei eine Außenleitung 14 und eine in der Außenleitung 14 angeordnete Innenleitung 15. Der Zwischenraum zwischen der Außenleitung 14 und der Innenleitung 15 dient als Entlüftungsleitung 16. Bei Einfüllen einer Betriebsflüssigkeit in den Betriebsflüssigkeitsbehälter 1 über die Innenleitung 15 erfolgt die Entlüftung aus dem Betriebsflüssigkeitsbehälter 1 über die Entlüftungsleitung 16. Da jedoch die Einlaufleitung 15 von der Entlüftungsleitung 16 getrennt ist, erfolgt die Entlüftung nicht im Gegenstrom zu der Betriebsflüssigkeit, so dass hohe Einfüllraten ermöglicht sind.

Aus Figur 7 ist der Verlauf einer Innenleitung 15 in einer zwei Biegungen 22 aufweisenden Außenleitung 15 dargestellt. Bei der Biegung des Einfüllschlauchs 10 erfolgt ein tangentiales Anliegen der Innenleitung 15 an die Außenleitung 14 an Kontaktpunkten 17, so dass ein Abknicken der Innenleitung 15 vermieden wird. Somit wird eine Belüftung zwischen der Außenleitung 14 und der Innenleitung 15 durch eine Biegung des Einfüllschlauchs 10 nicht behindert. Ferner wird auch ein Einfüllen der Betriebsflüssigkeit über die Innenleitung 15 nicht behindert, da die Innenleitung 15 aufgrund des tangentialen Anliegens an der Außenleitung 14 nicht abknickt.

Sowohl die Innenleitung 15 als auch die Außenleitung 14 können entweder als Glattschläuche oder als Wellschläuche ausgebildet sein. Eine als Glattschlauch ausgebildete Innenleitung 15 bietet den Vorteil, dass diese geringere Verwirbelungen der Betriebsflüssigkeit beim Einfüllen bewirkt, so dass die Einfüllraten erhöht werden können. Eine als Wellschlauch ausgebildete Außenleitung 14 bietet den Vorteil, dass diese kleinere Biegungsradien aufweisen kann, da eine als Wellschlauch 14 ausgebildete Außenleitung 14 eine erhöhte Flexibilität aufweist.

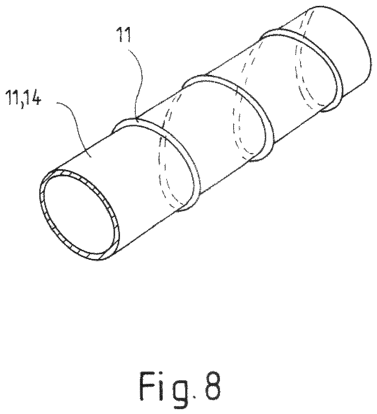

Aus Figur 8 ist ein Einfüllschlauch 10 bzw. eine Außenleitung 14 ersichtlich, die zumindest abschnittsweise eine spiralförmig an der Außenseite verlaufende Versteifungsstruktur 10 umfasst. Die spiralförmig ausgebildete Versteifungsstruktur 11 ist vorzugsweise stoffschlüssig mit dem Einfüllschlauch 10 bzw. mit der Außenleitung 14 verbunden.

Durch die spiralförmig ausgebildete Versteifungsstruktur 11 weist der Einfüllschlauch 10 bzw. die Außenleitung 14 in diesem Bereich eine erhöhte Steifigkeit auf, so dass entsprechend ausgebildete Bereiche vorzugsweise bei geraden Verbindungen zwischen zwei Einfüllschlauchhalteeinrichtungen 20 verwendet werden können.

Natürlich ist es auch möglich, dass der Einfüllschlauch 10 abschnittsweise die in Figur 8 dargestellte spiralförmige Versteifungsstruktur 11 umfasst, und an anderen Abschnitten als Wellrohr bzw. Wellschlauch ausgebildet ist. An anderen Abschnitten kann der Einfüllschlauch 10 als Glattrohr bzw. Glattschlauch ausgebildet sein.

Die Verbindung des Einfüllschlauchs 10 zu dem Betriebsflüssigkeitsbehälter 1 bzw. zu dem Einfüllstutzen 30 kann beispielsweise durch eine Verschweißung oder eine Verklebung erfolgen. Ferner können diese Verbindungen auch formschlüssig ausgebildet sein. Zu diesem Zweck ist es möglich, dass an den Endbereichen des Einfüllschlauchs 10 in den Figuren nicht dargestellte Schnittstellenbauteile an die Enden den Einfüllschlauchs 10 angespritzt sind.

Je nach Ausführungsart können die Verbindungen bzw. Verclipsungen zwischen dem Einfüllschlauch 10 und der Einfüllschlauchhalteeinrichtung 20 so gewählt werden, dass die Halterung des Einfüllschlauchs 10 an spezifischen Stellen die Bewegung des Einfüllschlauchs 10 verhindern und an anderen Stellen die Bewegung des Einfüllschlauchs hingegen ermöglichen.

In dem Fall der Ausgestaltung der Einfüllschlauchhalteeinrichtung 20 als Konturschale 20 sind diese bevorzugt im Spritzgießverfahren hergestellt. Wie bereits oben erwähnt, können die Konturschalen auch weitere Funktionen aufweisen, nämlich die Funktion des Brandschutzes für Einfüllschlauch 10, die Funktion des Schutzes vor Steinschlag, Scheuerabnutzung oder als Reifenplatzerschutz, die Funktion einer Halterung für Entlüftungs- und/oder Befüllschläuche, Kabel, Seile und dergleichen. Ferner kann eine Radhausschale an der dem Rad abgewandten Seite eine Halteeinrichtung zum Halten des Einfüllschlauchs 10 aufweisen, so dass die Radhausschale als Einfüllschlauchhalteeinrichtung 20 ausgebildet ist. Die Konturschale 20 kann ferner eine Außenstützfunktion des Einfüllschlauchs 10 übernehmen, so dass ein Kollabieren des Einfüllschlauchs 10 vermieden wird. Die Einfüllschlauchhalteeinrichtung 20 kann auch an Referenzpunktsystem-Aufnahmepunkten befestigt sein.

### Bezugszeichenliste:

- 1: Betriebsflüssigkeitsbehälter / Kraftstoffbehälter / SCR-Behälter
- 10: Einfüllschlauch / Wellrohr / Wellschlauch
- 11: Versteifungsstruktur (des Einfüllschlauchs)
- 12: Einbuchtung
- 14: Außenleitung
- 15: Innenleitung
- 16: Entlüftungsleitung
- 17: Kontaktpunkt (zwischen Innenleitung und Außenleitung)
- 20: Einfüllschlauchhalteeinrichtung / Konturschale / Rohrschelle
- 21: Hinterschnitt / Befestigungslasche / Befestigungszunge
- 22: Biegung (der Kontur)
- 23: Seitenwand (der Einfüllschlauchhalteeinrichtung)
- 30: Einfüllstutzen
- 40: Befestigungspunkt (im Einbauraum des Kraftfahrzeugs)

## Patentansprüche

1. Befüllsystem für einen Betriebsflüssigkeitsbehälter (1) eines Kraftfahrzeugs, umfassend einen flexiblen Einfüllschlauch (10), einen Einbauraum und zumindest eine Einfüllschlauchhalteeinrichtung (20), wobei das Befüllsystem folgende Merkmale aufweist:
- der flexible Einfüllschlauch (10) ist mit einem Betriebsflüssigkeitsbehälter (1) und mit einem Einfüllstutzen (30) fluidverbindbar; die Einfüllschlauchhalteeinrichtung (20) ist als Konturschale ausgebildet, **dadurch gekennzeichnet, dass**
- der flexible Einfüllschlauch (10) ist mittels der Einfüllschlauchhalteeinrichtung (20) im Einbauraum des Kraftfahrzeugs derart befestigt, dass der flexible Einfüllschlauch (10) eine durch die Einfüllschlauchhalteeinrichtung (20) definierte Kontur aufweist, und dass die Einfüllschlauchhalteeinrichtung (20) in dem Einbauraum des Kraftfahrzeugs befestigt ist.

2. Befüllsystem nach Anspruch 1, **dadurch gekennzeichnet, dass** die Einfüllschlauchhalteeinrichtung (20) zumindest einen Hinterschnitt (21) umfasst, wobei der an der Einfüllschlauchhalteeinrichtung (20) befestigte Einfüllschlauch (10) durch den Hinterschnitt (21) hintergriffen ist.

3. Befüllsystem nach einem der vorhergehenden Ansprüche, **dadurch gekennzeichnet, dass** die durch die Einfüllschlauchhalteeinrichtung (20) definierte Kontur zumindest eine Biegung (22) aufweist, so dass ein mittels der Einfüllschlauchhalteeinrichtung (20) befestigter Einfüllschlauch (10) der Biegung (22) folgt.

4. Befüllsystem nach einem der vorhergehenden Ansprüche, **dadurch gekennzeichnet, dass** die Einfüllschlauchhalteeinrichtung (20) zumindest eine Sollbruchstelle aufweist.

5. Befüllsystem nach einem der vorhergehenden Ansprüche, **dadurch gekennzeichnet, dass** die Einfüllschlauchhalteeinrichtung (20) als Radhausschale mit integrierter Halteeinrichtung für den Einfüllschlauch (10) ausgebildet ist.

6. Befüllsystem nach einem der vorhergehenden Ansprüche, **dadurch gekennzeichnet, dass** der Einfüllschlauch (10) als mehrlagiger Einfüllschlauch (10) mit einer integrierten Barriereschicht für Kohlenwasserstoffe ausgebildet ist.

7. Befüllsystem nach einem der vorhergehenden Ansprüche, **dadurch gekennzeichnet, dass** der Einfüllschlauch (10) eine koaxial zum Einfüllschlauch (10) verlaufende und im Querschnitt konkav ausgebildete Einbuchtung (12) aufweist.

8. Befüllsystem nach einem der vorhergehenden Ansprüche, **dadurch gekennzeichnet, dass** der Einfüllschlauch (10) zumindest abschnittsweise als Wellschlauch (10) ausgebildet ist.

9. Befüllsystem nach einem der vorhergehenden Ansprüche, **dadurch gekennzeichnet, dass** der Einfüllschlauch (10) zumindest abschnittsweise eine spiralförmig an der Außenseite des Einfüllschlauchs (10) verlaufende Versteifungsstruktur (11) umfasst.

10. Befüllsystem nach einem der vorhergehenden Ansprüche, **dadurch gekennzeichnet, dass** der Einfüllschlauch (10) als Doppelschlauch (10) mit einer Außenleitung (14) und einer in der Außenleitung (14) angeordneten Innenleitung (15) ausgebildet ist.

11. Befüllsystem nach Anspruch 10, **dadurch gekennzeichnet, dass** die Außenleitung (14) zumindest abschnittsweise als Wellschlauch (14) und die Innenleitung (15) zumindest abschnittsweise als Glattschlauch (15) ausgebildet ist.

12. Befüllsystem nach einem der Ansprüche 10 oder 11, **dadurch gekennzeichnet, dass** die Innenleitung (15) als mehrlagige Innenleitung (15) mit einer integrierten Barriereschicht für Kohlenwasserstoffe ausgebildet ist und/oder die Außenleitung (14) als mehrlagige Außenleitung (14) mit einer integrierten Barriereschicht für Kohlenwasserstoffe ausgebildet ist.

13. Betriebsflüssigkeitsbehälter (1) mit einem Einfüllstutzen (30), **dadurch gekennzeichnet, dass** der Betriebsflüssigkeitsbehälter (1) folgende Merkmale aufweist;
- der Betriebsflüssigkeitsbehälter (1) umfasst ein Befüllsystem nach einem der vorhergehenden Ansprüche;
- ein erstes Ende des Einfüllschlauchs (10) ist mit dem Betriebsflüssigkeitsbehälter (1) und ein zweites Ende des Einfüllschlauchs (10) ist mit dem Einfüllstutzen (30) fluidverbunden;
- der Einfüllschlauch (10) ist mittels der Einfüllschlauchhalteeinrichtung (20) oder der Einfüllschlauchhalteeinrichtungen (20) im Einbauraum des Kraftfahrzeugs derart befestigbar, dass der Einfüllschlauch (10) einer durch die Einfüllschlauchhalteeinrichtung (20) oder durch die Einfüllschlauchhalteeinrichtungen (20) definierten Kontur folgt.

14. Betriebsflüssigkeitsbehälter (1) nach Anspruch 13, sofern dieser ein Befüllsystem nach einem der Ansprüche 10 bis 12 umfasst, **dadurch gekennzeichnet, dass** der Betriebsflüssigkeitsbehälter (1) folgenden Merkmale aufweist:
- die Innenleitung (15) und die Außenleitung (14) des Einfüllschlauchs (10) sind jeweils mit dem Betriebsflüssigkeitsbehälter (1) und dem Einfüllstutzen (30) fluidverbunden;
- eine Betriebsflüssigkeit ist über den Einfüllstutzen (30) und die Innenleitung (15) in den Betriebsflüssigkeitsbehälter (1) einfüllbar; und
- der Zwischenraum zwischen der Außenleitung (14) und der Innenleitung (15) des Einfüllschlauchs (10) bildet eine Entlüftungsleitung (16) zwischen dem Betriebsflüssigkeitsbehälterinnenraum und dem Einfüllstutzen (30).

15. Kraftfahrzeug, **gekennzeichnet durch** die folgenden Merkmale:
- das Kraftfahrzeug umfasst einen Betriebsflüssigkeitsbehälter (1) nach Anspruch 13 oder 14;
- die Einfüllschlauchhalteeinrichtung (20) ist in einem Einbauraum des Kraftfahrzeugs befestigt;
- der Einfüllschlauch (10) ist mittels des Einfüllschlauchhalteeinrichtung (20) im Einbauraum des Kraftfahrzeugs gehalten; und
- ein erstes Ende des Einfüllschlauchs (10) ist mit dem Betriebsflüssigkeitsbehälter (1) und ein zweites Ende des Einfüllschlauchs (10) ist mit dem Einfüllstutzen (30) fluidverbunden.

## Claims

1. Filling system for an operating fluid container (1) of a motor vehicle, comprising a flexible filling hose (10), an installation space and at least one filling hose holding device (20), wherein the filling system has the following features:
- the flexible filling hose (10) can be fluidically connected to an operating fluid container (1) and to a filling neck (30); the filling hose holding device (20) is embodied as a contour shell, **characterized in that**
- the flexible filling hose (10) is fastened in the installation space of the motor vehicle by means of the filling hose holding device (20) in such a way that the flexible filling hose (10) has a contour which is defined by the filling hose holding device (20), and **in that** the filling hose holding device (20) is fastened in the installation space of the motor vehicle.

2. Filling system according to Claim 1, **characterized in that** the filling hose holding device (20) comprises at least one undercut (21), wherein the undercut (21) engages behind the filling hose (10) which is fastened to the filling hose holding device (20).

3. Filling system according to one of the preceding claims, **characterized in that** the contour which is defined by the filling hose holding device (20) has at least one bend (22), with the result that a filling hose (10) which is fastened by means of the filling hose holding device (20) follows the bend (22).

4. Filling system according to one of the preceding claims, **characterized in that** the filling hose holding device (20) has at least one predetermined break point.

5. Filling system according to one of the preceding claims, **characterized in that** the filling hose holding device (20) is embodied as a wheel house shell with integrated holding device for the filling hose (10).

6. Filling system according to one of the preceding claims, **characterized in that** the filling hose (10) is embodied as a multi-layer filling hose (10) with an integrated barrier layer for hydrocarbons.

7. Filling system according to one of the preceding claims, **characterized in that** the filling hose (10) has a recess (12) which runs coaxially with respect to the filling hose (10) and is of concave design in cross section.

8. Filling system according to one of the preceding claims, **characterized in that** the filling hose (10) is embodied at least in certain sections as a corrugated hose (10).

9. Filling system according to one of the preceding claims, **characterized in that** the filling hose (10) comprises at least in certain sections a reinforcement structure (11) which runs in a helical shape on the outside of the filling hose (10) .

10. Filling system according to one of the preceding claims, **characterized in that** the filling hose (10) is embodied as a double hose (10) with an outer line (14) and an inner line (15) which is arranged in the outer line (14).

11. Filling system according to Claim 10, **characterized in that** the outer line (14) is embodied at least in certain sections as a corrugated hose (14), and the inner line (15) is embodied at least in certain sections as a smooth hose (15).

12. Filling system according to one of Claims 10 and 11, **characterized in that** the inner line (15) is embodied as a multi-layer inner line (15) with an integrated barrier layer for hydrocarbons, and/or the outer line (14) is embodied as a multi-layer outer line (14) with an integrated barrier layer for hydrocarbons.

13. Operating fluid container (1) having a filling neck (30), **characterized in that** the operating fluid container (1) has the following features:
- the operating fluid container (1) comprises a filling system according to one of the preceding claims;
- a first end of the filling hose (10) is fluidically connected to the operating fluid container (1), and a second end of the filling hose (10) is fluidically connected to the filling neck (30);
- the filling hose (10) can be fastened in the installation space of the motor vehicle by means of the filling hose holding device (20) or the filling hose holding devices (20), in such a way that the filling hose (10) follows a contour which is defined by the filling hose holding device (20) or by the filling hose holding devices (20).

14. Operating fluid container (1) according to Claim 13, insofar as this comprises a filling system according to one of Claims 10 to 12, **characterized in that** the operating fluid container (1) has the following features:
- the inner line (15) and the outer line (14) of the filling hose (10) are each fluidically connected to the operating fluid container (1) and to the filling neck (30);
- an operating fluid can be filled into the operating fluid container (1) via the filling neck (30) and the inner line (15); and
- the intermediate space between the outer line (14) and the inner line (15) of the filling hose (10) forms a venting line (16) between the interior of the operating fluid container and the filling neck (30) .

15. Motor vehicle, **characterized by** the following features:
- the motor vehicle comprises an operating fluid container (1) according to Claim 13 or 14;
- the filling hose holding device (20) is fastened in an installation space of the motor vehicle;
- the filling hose (10) is held in the installation space of the motor vehicle by means of the filling hose holding device (20); and
- a first end of the filling hose (10) is fluidically connected to the operating fluid container (1) and a second end of the filling hose (10) is fluidically connected to the filling neck (30) .

## Revendications

1. Système de remplissage pour un récipient de liquide de service (1) d'un véhicule automobile, comprenant un tuyau de remplissage flexible (10), un espace d'installation et au moins un dispositif de retenue du tuyau de remplissage (20), le système de remplissage présentant les caractéristiques suivantes :
- le tuyau de remplissage flexible (10) peut être connecté fluidiquement à un récipient de liquide de service (1) et à une tubulure de remplissage (30) ;
le dispositif de retenue de tuyau de remplissage (20) est réalisé sous forme de coque structurée,
**caractérisé en ce que**
- le tuyau de remplissage flexible (10) est fixé au moyen du dispositif de retenue de tuyau de remplissage (20) dans l'espace d'installation du véhicule automobile de telle sorte que le tuyau de remplissage flexible (10) présente un contour défini par le dispositif de retenue de tuyau de remplissage (20) et **en ce que** le dispositif de retenue de de remplissage (20) est fixé dans l'espace d'installation du véhicule automobile.

2. Système de remplissage selon la revendication 1, **caractérisé en ce que** le dispositif de retenue de tuyau de remplissage (20) comprend au moins une contre-dépouille (21), le tuyau de remplissage (10) fixé au niveau du dispositif de retenue de tuyau de remplissage (20) étant saisi par l'arrière par la contre-dépouille (21).

3. Système de remplissage selon l'une quelconque des revendications précédentes, **caractérisé en ce que** le contour défini par le dispositif de retenue de tuyau de remplissage (20) présente au moins une courbure (22) de telle sorte qu'un tuyau de remplissage (10) fixé au moyen du dispositif de retenue de tuyau de remplissage (20) suive la courbure (22).

4. Système de remplissage selon l'une quelconque des revendications précédentes, **caractérisé en ce que** le dispositif de retenue de tuyau de remplissage (20) présente au moins une zone destinée à la rupture.

5. Système de remplissage selon l'une quelconque des revendications précédentes, **caractérisé en ce que** le dispositif de retenue de tuyau de remplissage (20) est réalisé sous forme de coque de passage de roue avec un dispositif de retenue intégré pour le tuyau de remplissage (10).

6. Système de remplissage selon l'une quelconque des revendications précédentes, **caractérisé en ce que** le tuyau de remplissage (10) est réalisé sous forme de tuyau de remplissage multicouche (10) comprenant une couche barrière aux hydrocarbures intégrée.

7. Système de remplissage selon l'une quelconque des revendications précédentes, **caractérisé en ce que** le tuyau de remplissage (10) présente un renfoncement (12) s'étendant coaxialement par rapport au tuyau de remplissage (10) et réalisé sous forme concave en section transversale.

8. Système de remplissage selon l'une quelconque des revendications précédentes, **caractérisé en ce que** le tuyau de remplissage (10) est réalisé au moins en partie sous forme de tuyau ondulé (10).

9. Système de remplissage selon l'une quelconque des revendications précédentes, **caractérisé en ce que** le tuyau de remplissage (10) comprend au moins en partie une structure de renforcement (11) s'étendant en spirale au niveau du côté extérieur du tuyau de remplissage (10).

10. Système de remplissage selon l'une quelconque des revendications précédentes, **caractérisé en ce que** le tuyau de remplissage (10) est réalisé sous forme de double tuyau (10) avec une conduite extérieure (14) et une conduite intérieure (15) disposée dans la conduite extérieure (14).

11. Système de remplissage selon la revendication 10, **caractérisé en ce que** la conduite extérieure (14) est réalisée au moins en partie sous forme de tuyau ondulé (14) et la conduite intérieure (15) est réalisée au moins en partie sous forme de tuyau lisse (15).

12. Système de remplissage selon l'une quelconque des revendications 10 ou 11, **caractérisé en ce que** la conduite intérieure (15) est réalisée sous forme de conduite intérieure multicouche (15) avec une couche barrière aux hydrocarbures intégrée et/ou la conduite extérieure (14) est réalisée sous forme de conduite extérieure multicouche (14) avec une couche barrière aux hydrocarbures intégrée.

13. Récipient de liquide de service (1) comprenant une tubulure de remplissage (30), **caractérisé en ce que** le récipient de liquide de service (1) présente les caractéristiques suivantes :
- le récipient de liquide de service (1) comprend un système de remplissage selon l'une quelconque des revendications précédentes ;
- une première extrémité du tuyau de remplissage (10) est connectée fluidiquement au récipient de liquide de service (1) et une deuxième extrémité du tuyau de remplissage (10) est connectée fluidiquement à la tubulure de remplissage (30) ;
- le tuyau de remplissage (10) peut être fixé au moyen du dispositif de retenue de tuyau de remplissage (20) ou des dispositifs de retenue de tuyau de remplissage (20) dans l'espace d'installation du véhicule automobile de telle sorte que le tuyau de remplissage (10) suive un contour défini par le dispositif de retenue de tuyau de remplissage (20) ou par les dispositifs de retenue de tuyau de remplissage (20) .

14. Récipient de liquide de service (1) selon la revendication 13 dans la mesure où celui-ci comprend un système de remplissage selon l'une quelconque des revendications 10 à 12, **caractérisé en ce que** le récipient de liquide de service (1) présente les caractéristiques suivantes :
- la conduite intérieure (15) et la conduite extérieure (14) du tuyau de remplissage (10) sont connectées fluidiquement chacune au récipient de liquide de service (1) et à la tubulure de remplissage (30) ;
- un liquide de service peut être introduit par le biais de la tubulure de remplissage (30) et de la conduite intérieure (15) dans le récipient de liquide de service (1) ; et
- l'espace intermédiaire entre la conduite extérieure (14) et la conduite intérieure (15) du tuyau de remplissage (10) forme une conduite de désaérage (16) entre l'espace intérieur du récipient de liquide de service et la tubulure de remplissage (30).

15. Véhicule automobile, **caractérisé par** les caractéristiques suivantes :
- le véhicule automobile comprend un récipient de liquide de service (1) selon la revendication 13 ou 14 ;
- le dispositif de retenue de tuyau de remplissage (20) est fixé dans un espace d'installation du véhicule automobile ;
- le tuyau de remplissage (10) est retenu dans l'espace d'installation du véhicule automobile au moyen du dispositif de retenue de tuyau de remplissage (20) ; et
- une première extrémité du tuyau de remplissage (10) est connectée fluidiquement au récipient de liquide de service (1) et une deuxième extrémité du tuyau de remplissage (10) est connectée fluidiquement à la tubulure de remplissage (30).
